# EUROPEAN PATENT SPECIFICATION

(11) **EP 3 668 709 B1**
(45) Date of publication and mention of the grant of the patent: **04.03.2026**
(21) Application number: 18766374.5
(22) Date of filing: 03.08.2018
(51) Int. Cl.: B32B 3/12, B32B 7/12, B32B 21/02, B32B 21/06, B32B 29/00, B32B 3/02, B32B 3/06, B65D 19/00

(54) **STRIP-SHAPED SANDWICH STRUCTURE**
STREIFENFÖRMIGE SANDWICHSTRUKTUR
STRUCTURE EN SANDWICH FORMÉE AVEC DES BANDES

(30) Priority: 03.08.2017 NL 2019389
(43) Date of publication of application: 24.06.2020
(73) Proprietor: Greenmarking B.V., 7411 KX Deventer (NL)
(72) Inventor: VAN DER HORST, Mark Wessel, 7411 KX Deventer (NL)
(74) Representative: Algemeen Octrooi- en Merkenbureau B.V.
(86) International application number: PCT/NL2018/050533
(87) International publication number: WO 2019/027324

(56) References cited:
- WO-A2-2007/120037
- US-A- 4 388 378
- US-A1- 2011 132 236

## Description

The present invention relates to a strip-shaped sandwich structure comprising two parallel cover plates between which ribs extend for reinforcing the sandwich structure.

The above-mentioned sandwich structure is already known. A sandwich structure containing parallel length ribs which extend in the length direction, between the cover plates, for reinforcing the sandwich structure and parallel width ribs which extend in the width direction, between the cover plates, for reinforcing the sandwich structure, is already known. For example, WO2007/120037A2 discloses a panel comprising two parallel skin plates between which ribs extend for stiffening the panel, for use as a scaffolding board or a construction element.

An area of application for the above-mentioned sandwich structure relates to pallets. The length ribs and width ribs provide reinforcement to the sandwich structure in such a way that this structure is strong enough to function as a pallet.

A drawback of the known sandwich structures is that they are expensive, or not suitable for use as a filler plate.

It is therefore an object of the present invention to provide a sandwich structure which is suitable for use as a filler plate, which sandwich structure is cost-efficient and sufficiently stiff, thus to a large degree preventing sagging.

In a first aspect, the invention provides a strip-shaped sandwich structure, comprising:
strip-shaped sandwich structure, comprising:
   - two parallel cover plates, wherein the cover plates are made of cardboard and/or fibreboard, wherein a thickness of the cover plates is between 0.1 mm - 10 mm, preferably between 0.1 mm - 4 mm, and in which the two cover plates are acetylated;
   - parallel length ribs which extend in the length direction, between the cover plates, for reinforcing the sandwich structure, wherein the length ribs are made of cardboard and/or fibreboard;
   - parallel width ribs which extend in the width direction, between the cover plates, for reinforcing the sandwich structure, wherein the width ribs are made of cardboard and/or fibreboard and are at a mutual distance from one another of between 10 mm - 150 mm;
   - longitudinal side walls at both ends of the sandwich structure which extend between the cover plates, in the width direction, for sealing the sandwich structure, wherein the longitudinal side walls are made of cardboard and/or fibreboard and wherein the longitudinal side walls are provided between the cover plates in such a way that both ends of the sandwich structure, in the width direction, are substantially flat;
wherein the length ribs and the width ribs are formed in such a way that a distance between the cover plates is between 5 mm - 19 mm.

It was the insight of the inventor that a sandwich structure comprising cover plates and ribs can efficiently be used if the distance between the cover plates is between 5 mm - 19 mm. Even at such a small thickness, the sandwich structure offers advantages with regard to stiffness and sagging. The thickness of this sandwich structure makes the entire unit extremely suitable for use as a filler plate.

It was furthermore an insight of the inventor that the construction of cover plates with ribs makes it possible to use cardboard and/or fibreboard. Cardboard and/or fibreboard is a material of relatively low quality. However, said structure offers sufficient stiffness, even when using fibreboard for the cover plates and the ribs.

The two cover plates are acetylated. Acetylation involves replacing hydroxyl groups in the wood with acetyl groups, which are chemically more stable and attract less moisture. Acetyl groups occur naturally in wood, albeit in a low quantity. By means of acetylation, the wood becomes approximately 15% harder and the cell walls absorb less moisture. As a result, there is less of a risk of the wood being damaged by fungi, and there is only a low level of shrinkage and swelling.

An example of acetylated cover plates is Tricoya. This is an MDF board in which the fibres used have been acetylated. This involves subjecting the fibres to a process in which the structure of the wood is changed, as a result of which it no longer, or hardly, reacts on direct contact with water. This makes the entire unit more durable and robust.

In the context of the present invention, cardboard and/or fibreboard is seen as a board which is composed of paper consisting of several layers, resulting in a weight of more than 179 grams per square meter.

In the context of the present invention, fibreboard is seen as a board which is composed of fibres to which a binder has been added. In principle, all kinds of fibres may be used, but in practice, wood chips are often used. Alternatively, straw, flax, fibreglass, bagasse, carbon fibres and aramid fibres may be used.

Furthermore, there is a large diversity of binders which are suitable for use in manufacturing a fibreboard, such as thermosets, lignin or resin. Some examples of fibreboard are wood fibreboard, medium-density fibreboard (MDF), chipboard, hardboard, softboard, fibre-reinforced plastic and plywood.

In a simple embodiment, folding box board and/or fibreboard is used. Folding box board and/or fibreboard is manufactured from, for example, waste paper, poplar and pine wood and has a weight of between 200 and 600 grams per square meter.

In a broader embodiment, use is made of solid board and/or fibreboard. Solid board and/or fibreboard is manufactured from, for example, waste paper and has a weight of between 500 and 1000 grams per square meter. Solid board and/or fibreboard can be provided with a coating paper on one or both sides in order to give an appearance which is more attractive or easier to print.

Another advantage of the sandwich structure according to the present invention is that it is stackable. The structure makes it possible for it to bear a relatively large weight, so that sandwich structures which are stacked on one another will remain intact.

In addition, an edge finish is directly possible, there is an unrestricted choice of finish of the cover plate, and there is an unrestricted choice of production finish with the cover plates.

Finally, the sandwich structure is modular. It is possible to set the total width, and the length, of the sandwich structure. In addition, several sandwich structures can be placed next to one another, or behind one another, in order to obtain a modular unit.

Preferably, the two cover plates comprise High Pressure Laminate plates. High Pressure Laminate is a combination of paper pulp and phenol resin, with a hard top layer of melamine resin. Melamine resin is a hard synthetically made organic substance. This also results in the high scratch and wear resistance of the HPL. The tough and elastic phenol core makes the material impact-resistant. These properties are accompanied by extensive resistance to chemicals and a high heat resistance, as a result of which the use of HPL is especially advantageous for this application.

In yet another example, the width ribs and/or the length ribs are attached to the cover plates using a layer of adhesive comprising a fibreglass component. The use of a fibreglass component ensures that the layer of adhesive adheres well, as a result of which the ribs are securely connected to the cover plates. Preferably, the width of the sandwich structure is between 60 mm - 300 mm.

Preferably, the length ribs and the width ribs are attached to the cover plates by adhesive bonding.

As a result, the ribs are positioned in a fixed manner with respect to the cover plates, thus ensuring a uniform support of the cover plates by the ribs.

Furthermore, a construction adhesive is preferably used and/or a waterproof adhesive, such as for example melamine adhesive. By means of adhesive bonding, it is possible to produce a strong connection between wood elements in a simple manner. Waterproof melamine adhesive is not susceptible to the action of moisture, which would make it possible to use the sandwich structure in moist environments as well.

Preferably, the cover plates, the width ribs, the length ribs and the longitudinal side walls are made of cardboard and/or fibreboard having a weight of 200 - 1000, preferably between 200 - 500 grams per square meter.

Preferably, the intersecting width ribs and length ribs are each provided with an indentation at their points of intersection in order to push the length ribs and the width ribs into one another.

In this way, a diamond-shaped or rectangular pattern can easily be produced, which makes it possible to ensure that both sides of the strips contact the respective cover plates of the sandwich structure. In addition, this allows a kind of accordion action, as a result of which the shape of the system of ribs can be modified to some degree before the ribs are fitted between the cover plates.

Preferably, at least a part of the sandwich structure is treated with a water-repellent material.

This makes it possible to use the panel in moist or even wet conditions, in particular if waterproof adhesive has been used in the application with adhesively bonded ribs.

Preferably, the length ribs are arranged at equal distances from one another. Preferably, the width ribs are arranged at equal distances from one another.

Another advantage is the fact that this, on the one hand, makes it possible to produce relatively lightweight sandwich structures which, on the other hand, provide sufficient strength.

The advantage of these examples is that this results in a uniform distribution of the strength of the sandwich structure.

Preferably, the cover plates, the length ribs and the width ribs are formed in such a way that a thickness of the sandwich structure is between 5 - 20 mm.

Also disclosed is a filler plate, wherein the filler plate comprises a sandwich structure according to one of the preceding examples.

The present invention will be explained in more detail below by means of some preferred embodiments according to the present invention. In the explanation, reference will be made to the attached drawings, in which:
Figure 1 shows a cross-sectional view of a sandwich structure according to the present invention.
Figure 2 shows a cut-away top view of a sandwich structure according to the present invention.

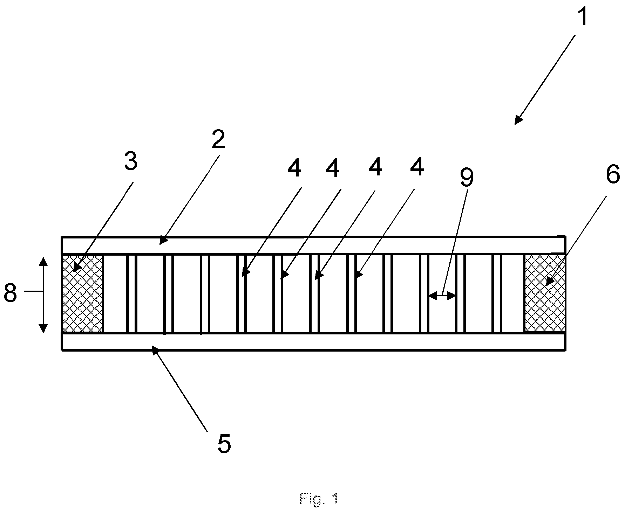

Looking at Figure 1, a cross-sectional view 1 of a strip-shaped sandwich structure according to the present invention is shown. The sandwich structure is strip-shaped because the structure is longer than it is wide and because the structure has a small thickness. The structure is therefore elongate and has a small thickness.

The sandwich structure comprises two parallel cover plates 2, 5, wherein the cover plates 2, 5 are made of cardboard and/or fibreboard and wherein the cover plates 2, 5 are not offset with respect to each other in a width direction.

Both cover plates 2, 5 are made of cardboard and/or fibreboard, more specifically, for example, of folding box board and/or fibreboard.

Folding box board and/or fibreboard usually consists of three or more layers of cellulose fibres. Each layer may in this case have its own composition. The layers are pressed onto one another in a cardboard and/or fibreboard machine. The upper side of the folding box board and/or fibreboard is usually white and can be provided with a coating layer. The advantage of a coating layer is that this layer can subsequently be printed using a variety of printing techniques. It is also possible to treat folding box board and/or fibreboard in such a way that it is water-repellent or oil-repellent.

The sandwich structure further comprises parallel length ribs 4 which extend in the length direction, between the cover plates 2, 5, for reinforcing the sandwich structure, wherein the length ribs 4 are made of cardboard and/or fibreboard.

The length direction is defined as the direction at right angles to the figure. That is to say into the figure. Figure 1 shows the head ends of the length ribs 4. The length ribs 4 connect the cover plates 2, 5 to each other. Preferably, the cover plates 2, 5 are connected to the length ribs 4 by adhesive bonding.

The distance 9 between the length ribs 4 is typically between 10 mm - 50 mm. Such a distance provides sufficient rigidity, and stiffness, to the sandwich structure. Preferably, the distance between the length ribs 4 is approximately equal. Furthermore preferably, the distance is preferably approximately 25 mm

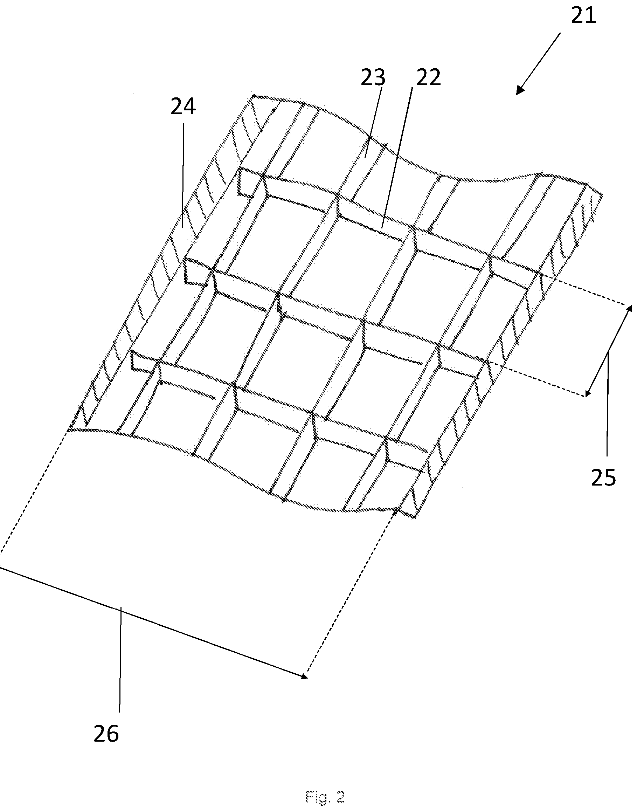

The strip-shaped sandwich structure furthermore comprises parallel width ribs (not shown in Figure 1) which extend in the width direction, between the cover plates 2, 5, for reinforcing the sandwich structure, wherein the width ribs are made of cardboard and/or fibreboard and are at a mutual distance from one another of between 10 mm - 150 mm;
These width ribs are not shown in Figure 1 because they run from the left-hand side of the sandwich structure to the right-hand side, or vice versa. The width ribs are shown in Figure 2 and will be explained further in the relevant explanation.

Furthermore, the sandwich structure comprises longitudinal side walls 3, 6 at both ends of the sandwich structure which extend between the cover plates 2, 5, in the width direction, for sealing the sandwich structure, wherein the longitudinal side walls 3, 6 are made of cardboard and/or fibreboard and wherein the longitudinal side walls are provided in the sandwich structure in such a way that the ends of the sandwich structure are substantially flat. This means that there are no indentations or stepped construction present at the ends of the sandwich structure.

According to the present invention, the cover plates 2, 5, the length ribs 4 and the width ribs are formed in such a way that the distance 8 between the cover plates is between 5 mm - 19 mm. In order to achieve this, the thickness 10 of the cover plates 2, 5 is typically between 0.1 mm - 10 mm, preferably between 0.1 mm - 4 mm.

The width of the sandwich structure is typically between 80 mm - 600 mm. The width is the distance from the left-hand side of the sandwich structure to the right-hand side of the sandwich structure, as illustrated in Figure 1.

Figure 2 shows a cut-away top view 21 of a sandwich structure according to the present invention.

In this figure, the length ribs are denoted by reference numeral 23 and the width ribs are denoted by reference numeral 22. The total width is denoted by reference numeral 26 and is, as has already been explained above, typically 80 mm - 600 mm. One of the two longitudinal side walls is denoted by reference numeral 24.

The distance 25 between the width ribs 22 is typically 10 mm - 150 mm, preferably 110 mm - 130 mm, still more preferably substantially 120 mm.

Intersecting width ribs 22 and length ribs 23 are each provided with an indentation at their points of intersection in order to push the length ribs 23 and the width ribs 22 into one another.

The above description and the figures are only shown to clarify the invention and by no means limit the scope of protection of the invention, which is defined by the attached claims. Alternative embodiments and further measures are possible without departing from the scope of protection of the present invention. Strip-shaped sandwich structures according to the present invention are, for example, suitable for use as slats, for example when stiffness in the direction at right angles to the plane of the sandwich structure is important and/or when the weight of a device in which the sandwich structure may be used is an important aspect. Environmental aspects may also play a part when deciding to use a sandwich structure according to the present invention.

## Claims

1. Strip-shaped sandwich structure, comprising:
- two parallel cover plates, wherein the cover plates are made of cardboard and/or fibreboard, wherein a thickness of the cover plates is between 0.1 mm - 10 mm, preferably between 0.1 mm - 4 mm, and in which the two cover plates are acetylated;
- parallel length ribs which extend in the length direction, between the cover plates, for reinforcing the sandwich structure, wherein the length ribs are made of cardboard and/or fibreboard;
- parallel width ribs which extend in the width direction, between the cover plates, for reinforcing the sandwich structure, wherein the width ribs are made of cardboard and/or fibreboard and are at a mutual distance from one another of between 10 mm - 150 mm;
- longitudinal side walls at both ends of the sandwich structure which extend between the cover plates, in the width direction, for sealing the sandwich structure, wherein the longitudinal side walls are made of cardboard and/or fibreboard and wherein the longitudinal side walls are provided between the cover plates in such a way that both ends of the sandwich structure, in the width direction, are substantially flat;
wherein the length ribs and the width ribs are formed in such a way that a distance between the cover plates is between 5 mm - 19 mm.

2. Strip-shaped sandwich structure according to Claim 1, wherein the two cover plates comprise High Pressure Laminate plates.

3. Strip-shaped sandwich structure according to one of the preceding claims, in which the width ribs and/or the length ribs are attached to the cover plates using a layer of adhesive comprising a fibreglass component.

4. Strip-shaped sandwich structure according to one of the preceding claims, wherein the width of the sandwich structure is between 60 mm - 300 mm.

5. Strip-shaped sandwich structure according to one of the preceding claims, wherein the length ribs and the width ribs are attached to the cover plates by adhesive bonding.

6. Strip-shaped sandwich structure according to one of the preceding claims, wherein the cover plates, the width ribs, the length ribs and the longitudinal side walls are made of cardboard and/or fibreboard having a mass density of between 200 - 1000, preferably between 200 - 500 grams per square meter.

7. Strip-shaped sandwich structure according to one of the preceding claims, wherein intersecting width ribs and length ribs are each provided with an indentation at their points of intersection in order to push the length ribs and the width ribs into one another.

8. Strip-shaped sandwich structure according to one of the preceding claims, wherein at least a part of the sandwich structure is treated with a water-repellent material.

9. Strip-shaped sandwich structure according to one of the preceding claims, wherein the length ribs are arranged at equal distances from one another.

10. Strip-shaped sandwich structure according to one of the preceding claims, wherein the width ribs are arranged at equal distances from one another.

## Patentansprüche

1. Streifenförmige Sandwichstruktur umfassend:
- zwei parallele Deckplatten, wobei die Deckplatten aus Karton und/oder Faserplatte bestehen, wobei eine Dicke der Deckplatten zwischen 0,1 mm und 10 mm, vorzugsweise zwischen 0,1 mm und 4 mm, beträgt und wobei die beiden Deckplatten acetyliert sind;
- parallele Längsrippen, die in der Längsrichtung zwischen den Deckplatten verlaufen, zur Verstärkung der Sandwichstruktur, wobei die Längsrippen aus Karton und/oder Faserplatte bestehen;
- parallele Querrippen, die in der Querrichtung zwischen den Deckplatten verlaufen, zur Verstärkung der Sandwichstruktur, wobei die Querrippen aus Karton und/oder Faserplatte bestehen und einen gegenseitigen Abstand von zwischen 10 mm und 150 mm voneinander aufweisen;
- längslaufende Seitenwände an beiden Enden der Sandwichstruktur in der Querrichtung, die zwischen den Deckplatten verlaufen, zum Abdichten der Sandwichstruktur, wobei die längslaufenden Seitenwände aus Karton und/oder Faserplatte bestehen und wobei die längslaufenden Seitenwände zwischen den Deckplatten so bereitgestellt sind, dass beide Enden der Sandwichstruktur in der Querrichtung im Wesentlichen flach sind;
wobei die Längsrippen und die Querrippen so gebildet sind, dass ein Abstand zwischen den Deckplatten zwischen 5 mm und 19 mm beträgt.

2. Streifenförmige Sandwichstruktur nach Anspruch 1, wobei die beiden Deckplatten Hochdrucklaminatplatten umfassen.

3. Streifenförmige Sandwichstruktur nach einem der vorstehenden Ansprüche, bei der die Querrippen und/oder die Längsrippen unter Verwendung einer Klebstoffschicht, die eine Glasfaserkomponente umfasst, an den Deckplatten befestigt sind.

4. Streifenförmige Sandwichstruktur nach einem der vorstehenden Ansprüche, wobei die Breite der Sandwichstruktur zwischen 60 mm und 300 mm beträgt.

5. Streifenförmige Sandwichstruktur nach einem der vorstehenden Ansprüche, wobei die Längsrippen und die Querrippen durch Kleben an den Deckplatten befestigt sind.

6. Streifenförmige Sandwichstruktur nach einem der vorstehenden Ansprüche, wobei die Deckplatten, die Querrippen, die Längsrippen und die längslaufenden Seitenwände aus Karton und/oder Faserplatte mit einer Massendichte von zwischen 200 und 1000, vorzugsweise zwischen 200 und 500, Gramm pro Quadratmeter bestehen.

7. Streifenförmige Sandwichstruktur nach einem der vorstehenden Ansprüche, wobei sich kreuzende Querrippen und Längsrippen an ihren Kreuzungspunkten jeweils mit einer Einbuchtung versehen sind, um die Längsrippen und die Querrippen ineinander zu drücken.

8. Streifenförmige Sandwichstruktur nach einem der vorstehenden Ansprüche, wobei wenigstens ein Teil der Sandwichstruktur mit einem wasserabweisenden Material behandelt ist.

9. Streifenförmige Sandwichstruktur nach einem der vorstehenden Ansprüche, wobei die Längsrippen in gleichen Abständen voneinander angeordnet sind.

10. Streifenförmige Sandwichstruktur nach einem der vorstehenden Ansprüche, wobei die Querrippen in gleichen Abständen voneinander angeordnet sind.

## Revendications

1. Structure en sandwich en forme de bandes, comprenant :
- deux plaques de recouvrement parallèles, dans laquelle les plaques de recouvrement sont réalisées en carton et/ou en panneau de fibres, dans laquelle l'épaisseur des plaques de recouvrement est comprise entre 0,1 mm et 10 mm, de préférence entre 0,1 mm et 4 mm, et où les deux plaques de recouvrement sont acétylées ;
- des nervures en longueur parallèles qui s'étendent dans la direction de la longueur, entre les plaques de recouvrement, pour renforcer la structure en sandwich, dans laquelle les nervures en longueur sont réalisées en carton et/ou en panneau de fibres ;
- des nervures en largeur parallèles qui s'étendent dans la direction de la largeur, entre les plaques de recouvrement, pour renforcer la structure en sandwich, dans laquelle les nervures en largeur sont réalisées en carton et/ou en panneau de fibres et sont situées les unes des autres à une distance mutuelle comprise entre 10 mm et 150 mm ;
- des parois latérales longitudinales aux deux extrémités de la structure en sandwich qui s'étendent entre les plaques de recouvrement, dans la direction de la largeur, pour sceller la structure en sandwich, dans laquelle les parois latérales longitudinales sont réalisées en carton et/ou en panneau de fibres et dans laquelle les parois latérales longitudinales sont prévues entre les plaques de recouvrement de manière à ce que les deux extrémités de la structure en sandwich, dans la direction de la largeur, soient sensiblement plates ;
dans laquelle les nervures en longueur et les nervures en largeur sont formées de manière à ce que la distance entre les plaques de recouvrement soit comprise entre 5 mm et 19 mm.

2. Structure en sandwich en forme de bandes selon la revendication 1, dans laquelle les deux plaques de recouvrement comprennent des plaques stratifiées à haute pression.

3. Structure en sandwich en forme de bandes selon l'une des revendications précédentes, dans laquelle les nervures en largeur et/ou les nervures en longueur sont fixées aux plaques de recouvrement en utilisant une couche d'adhésif comprenant un composant en fibre de verre.

4. Structure en sandwich en forme de bandes selon l'une des revendications précédentes, dans laquelle la largeur de la structure en sandwich est comprise entre 60 mm et 300 mm.

5. Structure en sandwich en forme de bandes selon l'une des revendications précédentes, dans laquelle les nervures en longueur et les nervures en largeur sont fixées aux plaques de recouvrement par liaison adhésive.

6. Structure en sandwich en forme de bandes selon l'une des revendications précédentes, dans laquelle les plaques de recouvrement, les nervures en largeur, les nervures en longueur et les parois latérales longitudinales sont réalisées en carton et/ou en panneau de fibres ayant une masse volumique comprise entre 200 et 1000, de préférence entre 200 et 500 grammes par mètre carré.

7. Structure en sandwich en forme de bandes selon l'une des revendications précédentes, dans laquelle les nervures en largeur et les nervures en longueur qui se croisent sont chacune pourvues d'une indentation à leurs points d'intersection afin de pousser les nervures en longueur et les nervures en largeur les unes dans les autres.

8. Structure en sandwich en forme de bandes selon l'une des revendications précédentes, dans laquelle au moins une partie de la structure en sandwich est traitée avec un matériau hydrofuge.

9. Structure en sandwich en forme de bandes selon l'une des revendications précédentes, dans laquelle les nervures en longueur sont agencées à des distances égales les unes des autres.

10. Structure en sandwich en forme de bandes selon l'une des revendications précédentes, dans laquelle les nervures en largeur sont agencées à des distances égales les unes des autres.
